# EUROPEAN PATENT APPLICATION

(11) **EP 4 682 848 A1**
(43) Date of publication of application: **21.01.2026**
(21) Application number: 24382781.3
(22) Date of filing: 18.07.2024
(51) Int. Cl.: G07F 11/22, A47F 1/12, F16G 13/06, F16G 15/12, G07F 11/24, G07F 11/42

(54) **PRODUCT PUSHER-PULLER DEVICE FOR ARRANGEMENT ON A TRAY OF A VENDING MACHINE AND VENDING MACHINE**

(71) Applicant: Jofemar, S.A., 31350 Peralta (Navarra) (ES)
(72) Inventor: GUINDULAIN BUSTO, Jesús, 31350 Peralta (ES)
(74) Representative: Pons IP

(57) **Abstract**

The object of the invention is a tray product pusher-puller device for a vending machine that allows a very high thrust to be achieved in order to move heavy products while at the same time ensuring that the storage surface that constitutes the unitary puller is easily cleanable and removable, in addition to providing the product with a stable base for storage, wherein the invention further relates to the vending machine comprising said pusher-puller device.

## Description

### OBJECT OF THE INVENTION

The object of the invention is a tray product pusher-puller device for a vending machine that allows a very high thrust to be achieved in order to move heavy products while at the same time ensuring that the storage surface that constitutes the unitary puller is easily cleanable and removable, in addition to providing the product with a stable base for storage.

The invention also relates to the vending machine comprising said pusher-puller device.

### BACKGROUND OF THE INVENTION

A wide variety of pullers are known in the state of the art relating to vending machines for transporting products from their storage area to their collection area by the user, these products being able to be of very different shapes, sizes and weights, such as bottles, cans, bags of snacks, food, packages, etc., where the products are supported on the base of the puller and limited laterally by separation partitions that prevent the products in one channel from interfering with those stored in adjacent pullers. These channels have retaining straps on the front thereof to limit products from accidentally falling forward in the event of vandalism.

There are various mechanisms on the market for pulling these products, such as spirals, drag chains, conveyor belts, worm screws, etc., all of which have very low drag limits and surfaces that are difficult to clean in the event of an accidental spill of a product.

Particularly in the case of food dispensing, it is very important for the storage surfaces, in this case the pullers and the mechanisms associated with pulling the product, to be easily cleanable, since a very common practice is to place the packaged products displayed vertically to facilitate a better view of them by the customers, such that any failure in the sealing of the product causes a spillage of the product or remains thereof on the puller.

The European patent application EP06380188A1 from the same applicant is known, relating to a puller with a toothed belt on which a pusher is housed. This puller device has a thrust force the magnitude of which depends on the consistency of the belt that is placed below the pusher and moves it, since once it reaches its elastic limit, it stops pulling, and it also has surfaces that are very difficult to clean, such as the housing channel of the belt and the surface that is below it.

The tray product pusher-puller device for a vending machine of the present invention solves all the aforementioned drawbacks.

### DESCRIPTION OF THE INVENTION

The present invention relates to a tray product pusher-puller device for a vending machine, wherein the pusher-puller device comprises:
- a base where the products to be dispensed are arranged;
- a chain comprising a set of links, wherein the chain in turn comprises a first end configured to come into contact with the products to be dispensed; and
- drive means of the chain configured to, at least, move the chain in a forward direction of the products towards a dispensing or collection area thereof.

Optionally, the chain comprises a second end arranged below the base where the products to be dispensed are arranged. This means that additional space at the rear of the machine is not taken up to arrange the chain along its path. This is possible due to the fact that the pusher-puller thus configured does not require a channel in the base for the forward movement of the chain, such that the chain does not interfere with the products arranged on the base. In this way, the base or support surface of the products is completely smooth and flat without any projections, allowing perfect cleaning throughout the storage area and therefore the display of the stored product.

Optionally, the pusher-puller comprises a fairing inside which are located the drive means configured to carry out the movement of the first end of the chain and the second end of the chain in an essentially horizontal direction, wherein the first end of the chain and the second end of the chain can be moved in opposite directions.

Optionally, a toothed drive pinion gear is provided inside the fairing, rotatably mounted inside the fairing and configured to contact at least a portion of the links of the chain. Preferably, the links of the chain comprise at least one curved surface configured to contact a curved surface arranged between each pair of teeth of the toothed pinion gear.

The fairing is designed in such a way that the link chain is limited internally by the toothed drive gear and externally by the fairing itself, preventing the links from disengaging and forcing the chain to rotate around the gear and convert the rotary movement into longitudinal movement of the chain.

Optionally, the drive means are configured to drive the toothed pinion gear and consequently to, at least, move the chain in a forward direction of the products towards a dispensing or collection area thereof.

Optionally, the links of the chain comprise a projection configured to be in contact with a stop during the forward movement of said links during the movement of the chain in the forward direction of the products towards a dispensing or collection area thereof. This allows the links of the chain to rotate through an angle of up to 72° between adjacent links in a first direction, allowing the chain to rotate 180° around the toothed pinion gear, but preventing the chain from rotating in a direction opposite to the first direction. In this way, when the drive means actuate the toothed pinion gear, the links change from being arranged longitudinally below the base where the products to be dispensed are arranged to moving parallel in the opposite direction above the base to push the products placed on the base. This chain design prevents the links from rotating outwards, such that once they circulate along the top they behave like a rigid bar or a thrust piston.

By working in this way, the thrust limit is not limited by the characteristics of the plastic materials used, but is marked by the force limits of the drive means, such that the thrust capacity of this puller is tripled compared to the pullers of the state of the art in which the thrust capacity depends on the elastic limit of the belt.

Optionally, each link comprises a rotation shaft, where the projection is coupled to the rotation shaft of a link adjacent to the link where the stop with which it makes contact is arranged. This allows the height of the fairing through which the chain runs to be reduced by increasing the length of the projection arm by articulating it on an adjacent link, since the inclination of the projection arm is reduced and consequently the height of the fairing through which the same run.

The links of the chain have a curved surface on the outer part thereof especially configured to come into contact with the fairing and limit the disengagement of the chain.

The links are configured to facilitate the assembly therebetween by simply pushing them together such that the lugs at one end easily enter, causing the side walls of the next link to give way until they enter the holes. Once assembled, the resulting chain behaves like a rigid linear pusher.

This chain system allows the configuration of puller of different depths using the same production means, simply by changing the number of links to be assembled and the length of the support base of the products, resulting in a competitive advantage.

Optionally, the pusher-puller comprises a gearbox and a clutch, where the drive means are configured to perform the engagement of the gearbox with the clutch. In this way, when the drive means are activated, the clutch engages with the gearbox and the chain and, therefore, the products move. Intentionally, when the puller is at rest, if the pusher is manually acted upon forward, the gearbox is disengaged and the pusher can be freely moved backwards to reload the products onto the base.

Optionally and alternatively to the above, the pusher-puller comprises a gearbox and a revolution counter or encoder arranged in the gearbox, such that it is possible to control the positioning of the first end of the chain with respect to the base, and therefore after a sale, knowing in advance the dimensions of the dispensed product, the quantity of product remaining on the base is known, which is a very important added value for monitoring the stock of that product. In this second configuration of the pusher-puller, in which the clutch is replaced by a pinion gear, the first end of the chain is movable in both directions by the actuation of the drive means, such that its relative position with respect to the base where the products to be dispensed are arranged is always memorised.

Optionally, the base where the products to be dispensed are arranged can be removed from the tray and/or the chain, making it easier to clean.

Optionally, the base where the products to be dispensed are arranged can have different widths, to serve as a support for products of different widths, as well as to be able to prepare the products to be dispensed in each of the trays by varying the width of the bases arranged thereon.

Optionally, the pusher-puller comprises a set of LEDs, preferably two LEDs of different colours, preferably arranged at the first end of the puller such that they are visible from outside the machine to provide lighting assistance for loading products according to the expiry dates of the stored products. An LED of a first colour can light up when the machine is opened for refilling and indicate which products are close to expiry date and need to be removed or relocated. Using a product reading gun connected to the machine, the product information and its expiration date are passed thereto and the machine responds by moving the puller into which the specific product must be loaded backwards, with the exact measurement of the product to avoid two being inserted by mistake, and then lighting up another LED of a second colour so that the refill can be carried out in that channel travelled by the specific puller. In this way there is no possibility of error in refilling and the expiration date of each of the products stored in each channel is monitored.

The invention further relates to a vending machine comprising at least one pusher-puller as described above.

### DESCRIPTION OF THE FIGURES

To complement the description made herein and for a better understanding of the features of the invention according to a preferred practical embodiment thereof, a set of drawings is attached as an integral part of said description in which, for illustrative purposes and not limiting the scope of the invention, the following is shown:
Figure 1 shows a plan view of a pusher-puller of the present invention arranged in a tray.
Figure 2 shows a plan view of several pusher-pullers such as the one of the present invention arranged on a tray.
Figure 3 shows a side view of the pusher-puller of the present invention in a working position, where the products arranged on the base are not shown.
Figure 4 shows a cross-sectional view AA of Figure 2.

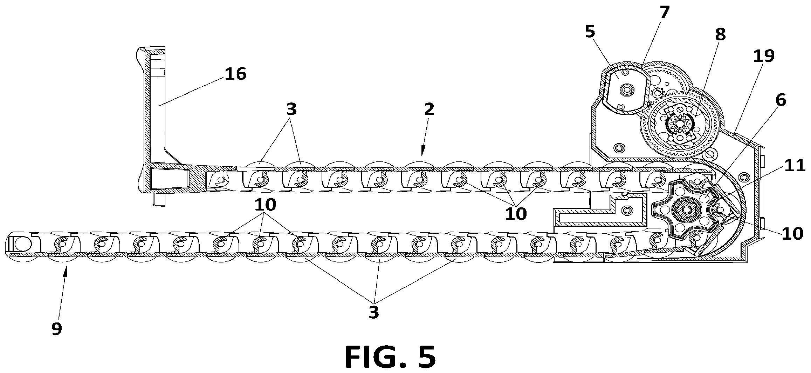

Figure 5 shows an opposite view to Figure 4 where only the chain and the fairing with all its components have been represented.

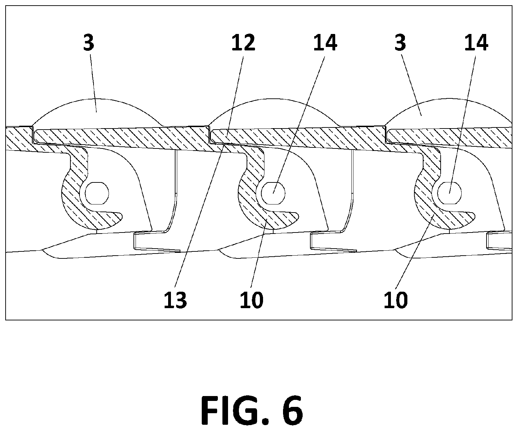

Figure 6 shows a detailed view of the projections and the stops of adjacent links of the chain of the pusher-puller of the present invention.

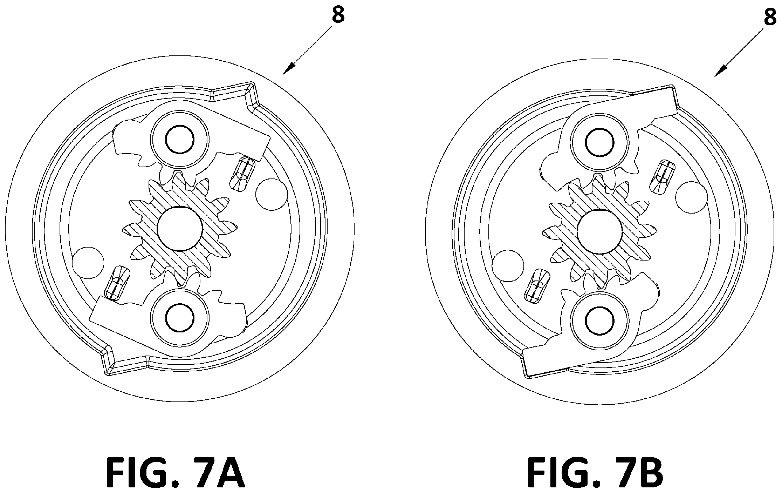

Figure 7A shows a cross-sectional view of the clutch of the pusher-puller in an engaged position.
Figure 7B shows a cross-sectional view of the clutch of the pusher-puller in a disengaged position.

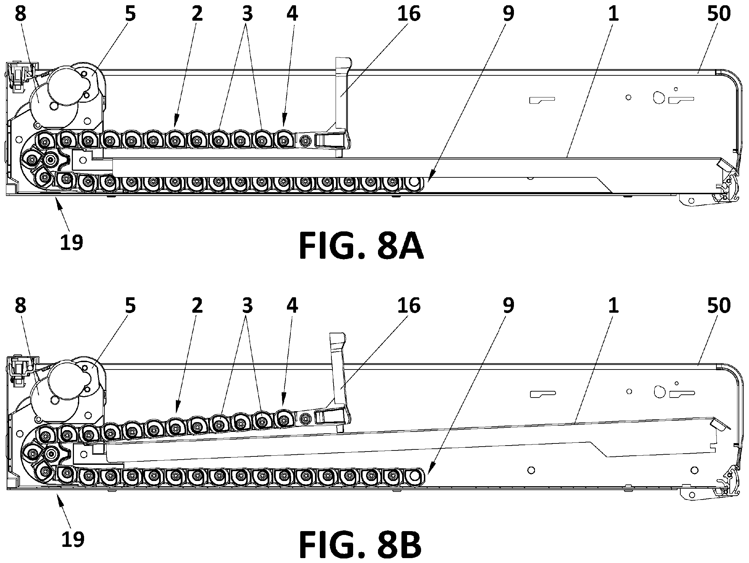

Figure 8A shows the pusher-puller in a working position.
Figure 8B shows the pusher-puller in a withdrawn position from the base where the products to be dispensed are arranged.

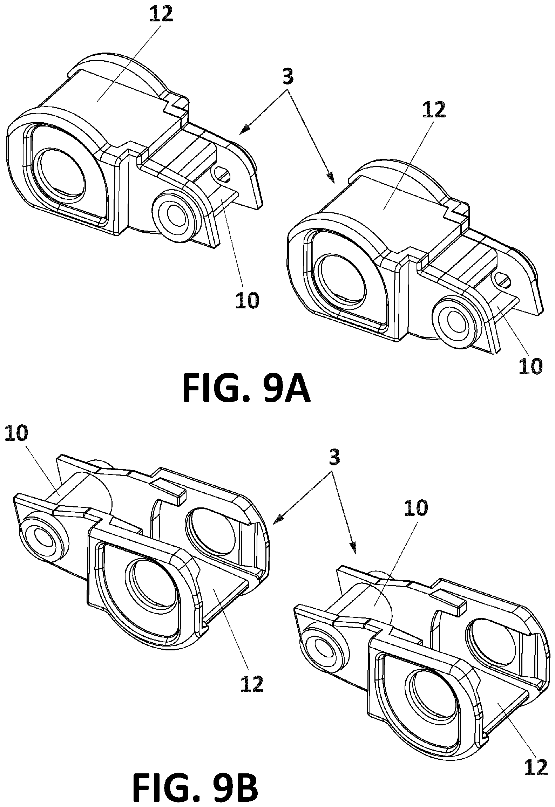

Figures 9A and 9B show links in position to be joined, viewed from above and below, respectively.

### PREFERRED EMBODIMENT OF THE INVENTION

Next, we will proceed to describe in detail the tray product pusher-puller device for a vending machine.

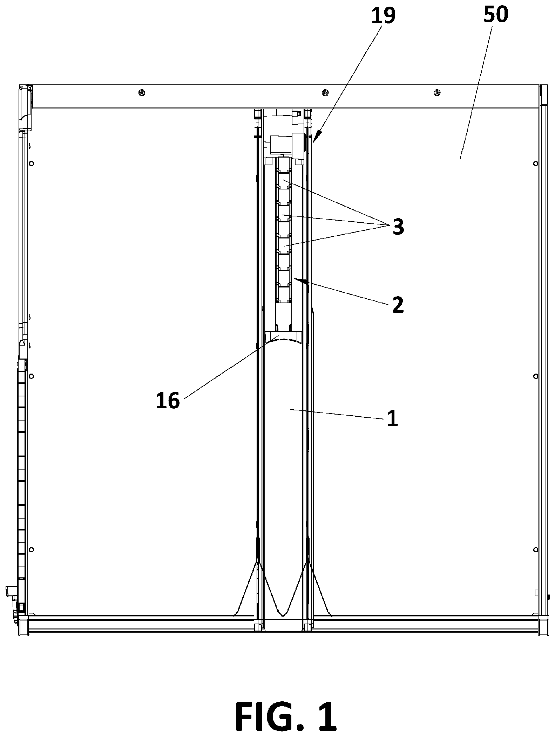

Figure 1 shows a tray product pusher-puller device for a vending machine according to the invention arranged on a tray (50) of the machine (not shown), wherein the tray product pusher-puller device for a vending machine, wherein the pusher-puller comprises:
- a base (1) where the products to be dispensed are arranged;
- a chain (2) comprising a set of links (3), wherein the chain (2) in turn comprises a first end (4) configured to come into contact with the products to be dispensed; and
- actuating means (5, 6, 7, 8) of the chain (2) configured to, at least, move the chain (2) in a forward direction of the products towards a dispensing or collection area thereof.

Preferably, the chain (2) comprises a pusher (16) arranged at the first end (4) of the chain (2), which pusher is essentially vertical.

The chain (2) comprises a second end (9) arranged below the base (1) where the products to be dispensed are arranged.

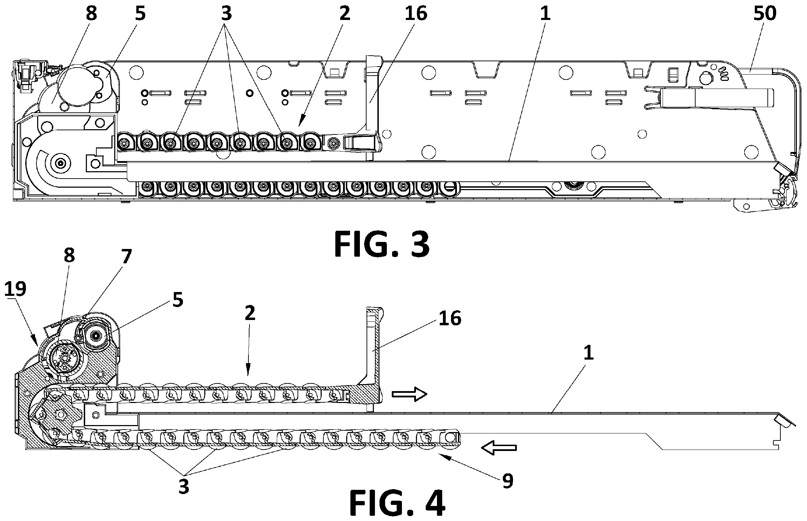

The pusher-puller comprises a fairing (19) inside which are arranged the drive means (5, 6, 7, 8) configured to carry out the movement of the first end (4) of the chain (2) and the second end (9) of the chain (2) in an essentially horizontal direction, wherein the first end (4) of the chain (2) and the second end (9) of the chain (2) can be moved in opposite directions, as seen in the arrows included in figure 4.

Inside the fairing (19) there is a toothed drive pinion gear (6) rotatably mounted inside the fairing (19) and configured to contact at least a portion of the links (3) of the chain (2), wherein the links (3) of the chain (2) comprise at least one curved surface (10) configured to contact a curved surface (11) arranged between each pair of teeth of the toothed pinion gear (6).

The drive means (5, 6, 7, 8) are configured to drive the toothed pinion gear (6) and consequently to, at least, move the chain (2) in a forward direction of the products towards a dispensing or collection area thereof.

The links (3) of the chain (2) comprise a projection (12), preferably being essentially horizontal, configured to be in contact with a stop (13), preferably being essentially horizontal, during the forward movement of said links (3) during the movement of the chain (2) in the forward direction of the products towards a dispensing or collection area thereof. The links (3) can rotate up to 72° between adjacent links in a first direction around a rotation axis (14) so that the chain (2) can be rotated 180° while the links (3) engage with the toothed pinion gear (6). The stop (13)-projection (12) assembly prevents the chain (2) from rotating in the opposite direction.

Each link (3) comprises a rotation shaft (14), where the projection (12) is coupled to the rotation shaft (14) of a link (3) adjacent to the link (3) where the stop (13) with which it makes contact is arranged. Preferably, once coupled in the stops (13), the projections (12) form a stepped surface.

In the exemplary embodiment shown in the figures, the pusher-puller comprises a gearbox (7) and a clutch (8), wherein the drive means (5, 6, 7, 8) are configured to perform the engagement of the gearbox (7) with the clutch (8), such that when the drive means (5, 6, 7, 8) are activated, the clutch (8) engages with the gearbox (7) and the chain (2) and, therefore, the products move. Intentionally, when the puller is at rest, if the pusher (16) is manually acted upon forward, the gearbox (7) is disengaged and the pusher (16) can be freely moved backwards to reload the products onto the base (1).

The base (1) where the products to be dispensed are arranged can be removed from the tray (50) and the chain (2), making it easier to clean.

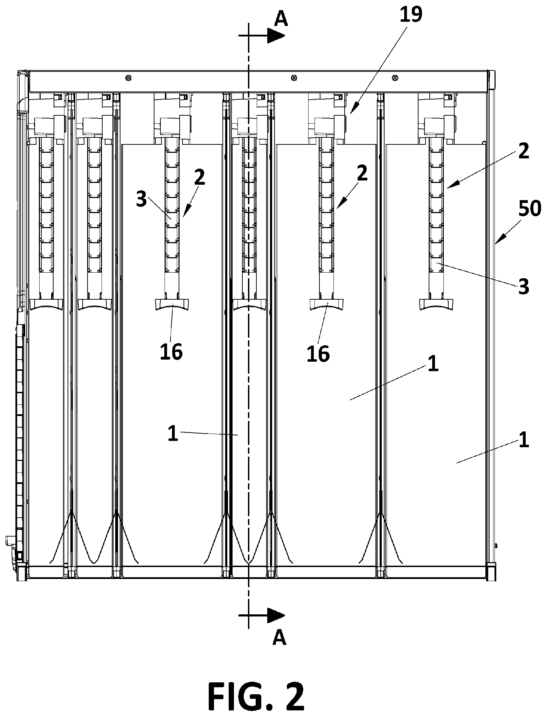

Optionally, the base (1) where the products to be dispensed are arranged can have different widths, as shown in figure 2, to serve as a support for products of different widths, as well as to be able to prepare the products to be dispensed in each of the trays (50) by varying the width of the bases (1) arranged thereon.

## Claims

1. A tray product pusher-puller device for a vending machine, wherein the pusher-puller comprises:
- a base (1) where the products to be dispensed are arranged;
- a chain (2) comprising a set of links (3), wherein the chain (2) in turn comprises a first end (4) configured to come into contact with the products to be dispensed; and
- actuating means (5, 6, 7, 8) of the chain (2) configured to, at least, move the chain (2) in a forward direction of the products towards a dispensing or collection area thereof.

2. The device according to claim 1, wherein the chain (2) comprises a pusher (16) arranged at the first end (4) of the chain (2), which pusher is essentially vertical.

3. The device according to any of the preceding claims, wherein the chain (2) comprises a second end (9) arranged below the base (1) where the products to be dispensed are arranged.

4. The device according to any of the preceding claims, comprising a fairing (19) inside which are arranged the drive means (5, 6, 7, 8) configured to carry out the movement of the first end (4) of the chain (2) and the second end (9) of the chain (2) in an essentially horizontal direction, wherein the first end (4) of the chain (2) and the second end (9) of the chain (2) can be moved in opposite directions.

5. The device according to claim 4, wherein inside the fairing there is a toothed drive pinion gear (6) rotatably mounted inside the fairing (19) and configured to contact at least a portion of the links (3) of the chain (2), wherein the links (3) of the chain (2) comprise at least one curved surface (10) configured to contact a curved surface (11) arranged between each pair of teeth of the toothed pinion gear (6).

6. The device according to claim 5, wherein the drive means (5, 6, 7, 8) are configured to drive the toothed pinion gear (6) and consequently to, at least, move the chain (2) in a forward direction of the products towards a dispensing or collection area thereof.

7. The device according to any of the preceding claims, wherein the links (3) of the chain (2) comprise a projection (12) configured to be in contact with a stop (13) during the forward movement of said links (3) during the movement of the chain (2) in the forward direction of the products towards a dispensing or collection area thereof.

8. The device according to claim 7, wherein the links (3) can rotate up to 72° between adjacent links in a first direction around a rotation shaft (14) so that the chain (2) can be rotated 180° while the links (3) engage with the toothed pinion gear (6).

9. The device according to claim 8, wherein the stop (13) - projection (12) assemblies prevent the chain (2) from rotating in the opposite direction to the first direction.

10. The device according to claim 8, wherein the projection (12) is coupled to the rotation shaft (14) of a link adjacent to the link (3) where the stop (13) with which it makes contact is arranged.

11. The device according to any of the preceding claims, comprising a gearbox (7) and a clutch (8), wherein the drive means (5, 6, 7, 8) are configured to perform the engagement of the gearbox (7) with the clutch (8), such that when the drive means (5, 6, 7, 8) are activated, the clutch (8) engages with the gearbox (7) and the chain (2) and, therefore, the products move.

12. The device according to claim 11, wherein when the puller is at rest, if the pusher (16) is manually acted upon forward, the gearbox (7) is disengaged and the pusher (16) can be freely moved backwards to reload the products onto the base (1).

13. The device according to any of the preceding claims, wherein the base (1) where the products to be dispensed are arranged can be removed from the tray (50) and/or the chain (2).

14. The device according to claim 5, wherein the chain (2) is limited internally by the toothed drive pinion gear (6) and externally by the fairing (19) itself.

15. A vending machine comprising at least one tray (50) comprising at least one device of any of the preceding claims.

## Amended claims

### Amended claims in accordance with Rule 137(2) EPC.

1. A product pusher-puller device for arrangement on a tray of a vending machine, wherein the pusher-puller comprises:
- a base (1) where the products to be dispensed are arranged;
- a chain (2) comprising a set of links (3), wherein the chain (2) in turn comprises a first end (4) configured to come into contact with the products to be dispensed and a second end (9);
- actuating means (5, 6, 7, 8) of the chain (2) configured to, at least, move the chain (2) in a forward direction of the products towards a dispensing or collection area thereof; and
- a fairing (19) inside which are arranged drive means (5, 6, 7, 8) configured to carry out the movement of the first end (4) of the chain (2) and the second end (9) of the chain (2) in an essentially horizontal direction, wherein the first end (4) of the chain (2) and the second end (9) of the chain (2) can be moved in opposite directions.

2. The device according to claim 1, wherein the chain (2) comprises a pusher (16) arranged at the first end (4) of the chain (2), which pusher is essentially vertical.

3. The device according to any of the preceding claims, wherein the second end (9) is arranged below the base (1) where the products to be dispensed are arranged.

4. The device according to claim 1, wherein inside the fairing there is a toothed drive pinion gear (6) rotatably mounted inside the fairing (19) and configured to contact at least a portion of the links (3) of the chain (2), wherein the links (3) of the chain (2) comprise at least one curved surface (10) configured to contact a curved surface (11) arranged between each pair of teeth of the toothed pinion gear (6).

5. The device according to claim 4, wherein the drive means (5, 6, 7, 8) are configured to drive the toothed pinion gear (6) and consequently to, at least, move the chain (2) in a forward direction of the products towards a dispensing or collection area thereof.

6. The device according to any of the preceding claims, wherein the links (3) of the chain (2) comprise a projection (12) configured to be in contact with a stop (13) during the forward movement of said links (3) during the movement of the chain (2) in the forward direction of the products towards a dispensing or collection area thereof.

7. The device according to claim 6, wherein the links (3) can rotate up to 72° between adjacent links in a first direction around a rotation shaft (14) so that the chain (2) can be rotated 180° while the links (3) engage with the toothed pinion gear (6).

8. The device according to claim 7, wherein the stop (13) - projection (12) assemblies prevent the chain (2) from rotating in the opposite direction to the first direction.

9. The device according to claim 7, wherein the projection (12) is coupled to the rotation shaft (14) of a link adjacent to the link (3) where the stop (13) with which it makes contact is arranged.

10. The device according to any of the preceding claims, comprising a gearbox (7) and a clutch (8), wherein the drive means (5, 6, 7, 8) are configured to perform the engagement of the gearbox (7) with the clutch (8), such that when the drive means (5, 6, 7, 8) are activated, the clutch (8) engages with the gearbox (7) and the chain (2) and, therefore, the products move.

11. The device according to claim 10, wherein when the puller is at rest, if the pusher (16) is manually acted upon forward, the gearbox (7) is disengaged and the pusher (16) can be freely moved backwards to reload the products onto the base (1).

12. The device according to any of the preceding claims, wherein the base (1) where the products to be dispensed are arranged can be removed from the tray (50) and/or the chain (2).

13. The device according to claim 4, wherein the chain (2) is limited internally by the toothed drive pinion gear (6) and externally by the fairing (19) itself.

14. A vending machine comprising at least one tray (50) comprising at least one device of any of the preceding claims.
